# EUROPÄISCHE PATENTANMELDUNG

(11) **EP 2 886 426 A1**
(43) Veröffentlichungstag der Anmeldung: **24.06.2015**
(21) Anmeldenummer: 13199459.2
(22) Anmeldetag: 23.12.2013
(51) Int. Cl.: B62D 33/04, B62D 33/023

(54) **Nut/Feder-Verbindung eines Aufbaus eines Nutzfahrzeugs sowie Verfahren zur Bildung einer solchen Verbindung**

(71) Anmelder: Schmitz Cargobull AG, 48341 Altenberge (DE)
(72) Erfinder: Beelmann, Reinhard, 45721 Haltern am See (DE); Heinke, Gerald, 16540 Hohen Neuendorf (DE)
(74) Vertreter: Cohausz & Florack

(57) **Zusammenfassung**

Verfahren zur Bildung wenigstens einer Nut/Feder-Verbindung (8,8") eines Aufbaus eines Nutzfahrzeugs, wobei an wenigstens einer Flanke (11,11") der Nut (9,9") ein vom Nutgrund (10,10") beabstandeter und in die Nut (9,9") ragender Rasthaken (12,12") vorgesehen ist. Um einfach und schnell eine Verbindung mit bevorzugten Eigenschaften erhalten zu können, ist vorgesehen, dass die Feder (14,14") einen Randbereich (19,19") und wenigstens eine an den Randbereich (19,19") angrenzende Hinterschneidung (18,18") aufweist und der Randbereich (19,19") der Feder (14,14") dicker als die Öffnungsweite der Nut (9,9") im Bereich des Rasthakens (12,12") ist, dass auf wenigstens eine Flanke (11,11") der Nut (9,9") zwischen dem wenigstens einen Rasthaken (12,12") und dem Nutgrund (10,10") ein Klebstoff (13) aufgebracht wird, dass der Randbereich (19,19") der Feder (14,14") unter Aufweitung der Nut (9,9") im Bereich der wenigstens einen mit Klebstoff (13) versehenen Flanke (11,11") an dem wenigstens einen Rasthaken (12,12") vorbei in die Nut (9,9") eingeschoben wird, dass der Randbereich (19,19") der Feder (14,14") an dem im aufgeweiteten Bereich der Nut (9,9") zwischen dem Nutgrund (10,10") und dem wenigstens einen Rasthaken (12,12") der entsprechenden Flanke (11,11") der Nut (9,9") vorgesehenen Klebstoff (13) vorbei in die Nut (9,9") eingeschoben wird, dass der wenigstens eine Rasthaken (12,12") im in die Nut (9,9") eingeschobenen Zustand der Feder (14,14") mit der wenigstens einen Hinterschneidung (18,18") formschlüssig verrastet und dass die mit dem Klebstoff (13) versehene Flanke (11,11") der Nut (9,9") beim Verrasten des wenigstens einen Rasthakens (12,12") mit der wenigstens einen Hinterschneidung (18,18") gegen den Randbereich (19,19") der Feder (14,14") gedrückt und mit dem Randbereich (19,19") der Feder (14,14") verklebt wird.

## Beschreibung

Die Erfindung betrifft ein Verfahren zur Bildung wenigstens einer Nut/Feder-Verbindung eines Aufbaus eines Nutzfahrzeugs, vorzugsweise, Lastkraftwagens, Anhängers oder Sattelaufliegers, wobei an wenigstens einer Flanke der Nut ein vom Nutgrund beabstandeter und in die Nut ragender Rasthaken vorgesehen ist, wobei die Feder einen Randbereich und wenigstens eine an den Randbereich angrenzende Hinterschneidung aufweist. Zudem betrifft die Erfindung einen Aufbau eines Nutzfahrzeugs, vorzugsweise Lastkraftwagens, Anhängers oder Sattelaufliegers, mit wenigstens einer Nut/Feder-Verbindung, wobei an wenigstens einer Flanke der Nut ein in die Nut ragender und vom Nutgrund beabstandeter Rasthaken vorgesehen ist, wobei die Feder einen Randbereich und wenigstens eine an den Randbereich angrenzende Hinterschneidung aufweist und wobei der wenigstens eine Rasthaken und die wenigstens eine Hinterschneidung formschlüssig verrastet sind.

Unter Nutzfahrzeugen im Sinne der Erfindung werden vorwiegend solche verstanden, die dem Transport von Gütern im öffentlichen Straßenverkehr dienen. Es kommen daher als Nutzfahrzeuge insbesondere Lastkraftwagen, Anhänger oder Sattelauflieger in Frage. Diese Nutzfahrzeuge weisen Aufbauten auf, die einen Laderaum umschließen, in dem die Güter zu ihrem Bestimmungsort transportiert werden können.

Bei diesen Aufbauten unterscheidet man beispielsweise sogenannte Planenaufbauten von sogenannten Kofferaufbauten. Bei Planenaufbauten sind die Seitenwände und das Dach mittels Planen verschlossen. Wenigstens die Seitenwände von Planenaufbauten können daher zum Be- und Entladen ohne Weiteres geöffnet werden. Um das Be- und Entladen über die Seitenwände zu erleichtern, können die Planen dort zu wenigstens einer Seite des Aufbaus aufgeschoben werden. Man spricht in diesem Zusammenhang von Curtainsidern.

Kofferaufbauten zeichnen sich im Gegensatz zu Planenaufbauten dadurch aus, dass ihre Seitenwände und das Dach durch feste Paneele gebildet werden. Auf diese Weise kann ein Eindringen von Feuchtigkeit in den Laderaum im Wesentlichen verhindert werden. Kofferaufbauten eignen sich aus diesem Grunde beispielsweise für den Trockentransport von feuchtigkeitsempfindlichen Gütern, wie beispielsweise Lebensmitteln. Zudem sind die Paneele von Kofferaufbauten in aller Regel mit einer Kernlage eines geschäumten Kunststoffes versehen, die eine hohe thermische Isolation bereitstellt. Kofferaufbauten sind daher in der Regel für Kühltransporte temperaturempfindlicher Güter geeignet.

Die Aufbauten von Nutzfahrzeugen werden in der Regel aus einzelnen Bauelementen bzw. einzelnen Baugruppen zusammengesetzt. Um das Zusammensetzen dieser Bauelemente bzw. Baugruppen zu vereinfachen, sind bereits Nut/FederVerbindungen vorgeschlagen worden. Dies gilt insbesondere für die Verbindungen von Seitenwandpaneelen mit den Dachpaneelen von Kofferaufbauten. Dabei wird die Nut typischerweise von einem Verbindungselement gebildet, in die ein Paneel in Form einer Feder eingesteckt werden kann. Die Verbindung zwischen den Paneelen und den Verbindungselementen kann dann durch Verrasten oder Verkleben hergestellt werden. Zur Ausbildung einer entsprechenden Rastverbindung, ist an wenigstens einer Flanke der Nut ein Rasthaken vorgesehen, der in eine den Randbereich des Paneels begrenzende Hinterschneidung einhakt, wenn das Paneel in Form der Feder in die Nut eingeschoben wird.

Das Verkleben des Verbinderelements mit der in die Nut eingeschobenen Feder bedarf eines nachträglichen Einbringens von Klebstoff in einen zwischen der Feder und der Nut gebildeten Spalt. Zwar kann bereits vor dem Einschieben der Feder in die Nut ein Klebstoff in dieser vorgesehen werden, allerdings werden auf diese Weise keine zufriedenstellenden Verbindungen erreicht. Entweder wird lediglich der Nutgrund mit der Stirnfläche der Feder verklebt oder es wird der auf die Flanken der Nut aufgebrachte Klebstoff beim Einschieben der Feder in die Nut von der Stirnfläche der Feder abgetragen. Eine reproduzierbare und zuverlässige Verklebung zwischen der Nut und der in die Nut eingeschobenen Feder kann auf diese Weise nicht erhalten werden.

Der vorliegenden Erfindung liegt daher die Aufgabe zugrunde, das Verfahren und die Nut/Feder-Verbindung jeweils der eingangs genannten Art derart auszugestalten und weiterzubilden, dass einfach und schnell eine Verbindung mit bevorzugten Eigenschaften erhalten werden kann.

Diese Aufgabe ist durch ein Verfahren gemäß Anspruch 1 gelöst, wobei der Randbereich der Feder dicker als die Öffnungsweite der Nut im Bereich des Rasthakens ist, bei dem auf wenigstens eine Flanke der Nut zwischen dem wenigstens einen Rasthaken und dem Nutgrund ein Klebstoff aufgebracht wird, bei dem der Randbereich der Feder unter Aufweitung der Nut im Bereich der wenigstens einen mit Klebstoff versehenen Flanke an den wenigstens einen Rasthaken vorbei in die Nut eingeschoben wird, bei dem der Randbereich der Feder an den im aufgeweiteten Bereich der Nut zwischen dem Nutgrund und dem wenigstens einen Rasthaken der entsprechenden Flanke der Nut vorgesehene Klebstoff vorbei in die Nut eingeschoben wird, bei dem der wenigstens eine Rasthaken im in die Nut eingeschobenen Zustand der Feder mit der wenigstens einen Hinterschneidung formschlüssig verrastet und bei dem die mit dem Klebstoff versehene Flanke der Nut beim Verrasten des wenigstens einen Rasthakens mit der wenigstens einen Hinterschneidung gegen den Randbereich der Feder gedrückt und mit dem Randbereich der Feder verklebt wird.

Die zuvor genannte Aufgabe ist ferner bei einem Aufbau gemäß dem Oberbegriff von Anspruch 8 dadurch gelöst, dass zwischen dem wenigstens einen Rasthaken und dem Nutgrund eine mit dem Randbereich der Feder verbundene Klebstoffschicht vorgesehen ist und wobei die Klebstoffschicht durch das Verrasten von Nut und Feder zwischen der Flanke der Nut und dem Randbereich der Feder verteilt worden ist.

Die Erfindung hat erkannt, dass eine Rastverbindung und eine stoffschlüssige Verbindung in Form einer Klebeverbindung zwischen der Nut und der Feder derart kombiniert werden kann, dass nicht nur eine reproduzierbare Rastverbindung, sondern auch eine reproduzierbare Klebeverbindung erreicht wird. Des Weiteren bedarf es erfindungsgemäß nicht des nachträglichen Einbringens von Klebstoff in den einen durch das Einschieben der Feder in die Nut gebildeten Spalt der Verbindung. Vielmehr kann der Klebstoff einfach und schnell vor dem Einstecken der Feder in die Nut auf eine Flanke derselben aufgebracht werden, und zwar zwischen dem Nutgrund und einem an der Flanke vorgesehenen Rasthaken.

Da die Feder dicker ist als die Öffnungsweite der Nut im Bereich des Rasthakens, wird beim Einschieben der Feder die Nut aufgeweitet, d. h. die wenigstens eine Flanke der Nut mit dem Rasthaken wird nach außen gedrückt. Der Rasthaken gleitet dabei am Randbereich der Feder ab und biegt die entsprechende Flanke der Nut derart aus, dass ein in dem umgebogenen Bereich der Flanke vorgesehener Klebstoff durch die Stirnseite der Feder nicht abgeschert werden kann. Durch das Aufweiten der Nut kann die Feder also am Klebstoff vorbei in die Nut eingeschoben werden. Im in die Nut eingeschobenen Zustand der Feder kommt es zu einem Verrasten der Nut mit der Feder über den wenigstens einen Rasthaken der entsprechenden Flanke der Nut mit einer den Randbereich der Feder nach innen begrenzenden Hinterschneidung.

Durch das Einrasten des Rasthakens in die entsprechende Hinterschneidung wird die zuvor beim Einschieben der Feder in die Nut bewirkte Aufweitung der Nut wenigstens teilweise aufgehoben. Dies bedeutet, dass die mit dem Rasthaken versehene Flanke der Nut sich dem angrenzenden Randbereich der Feder nähert. Dies kann beispielsweise durch ein elastisches Zurückfedern der Flanke der Nut erfolgen. Infolge der Annäherung der entsprechenden Flanke der Nut an den Randbereich der Feder wird der auf die entsprechende Flanke der Nut aufgebrachte Klebstoff gegen den Randbereich der Feder gedrückt, so dass sich zwischen der entsprechenden Flanke der Nut und dem entsprechenden Randbereich der Feder eine Klebeverbindung ausbilden kann.

Dabei wird das Aushärten der Klebeverbindung durch die beim Einschieben der Feder in die Nut gebildete Rastverbindung begünstigt, da durch den entsprechenden Formschluss die Feder gegenüber der Nut in Position gehalten wird. Dies ermöglicht es zudem, die Nut/Feder-Verbindung vor dem Aushärten weiter zu handhaben, um weitere Fertigungsschritte zur Herstellung des Aufbaus durchzuführen. Letztlich muss nicht auf das vollständige Aushärten des Klebstoffs gewartet werden, bevor ein weiteres Handling der Verbindung erfolgen kann.

Bei einer ersten bevorzugten Ausgestaltung des Verfahrens und der Nut/Feder-Verbindung weist jede Flanke der Nut wenigstens einen Rasthaken und der Randbereich der entsprechenden Federn auf gegenüberliegenden Seiten wenigstens jeweils eine Hinterschneidung auf. Zudem wird auf beide Flanken der Nut zwischen dem jeweiligen Rasthaken und dem Nutgrund ein Klebstoff aufgebracht, wobei der Randbereich der Feder unter Aufweitung der Nut im Bereich wenigstens einer Flanke an den wenigstens zwei Rasthaken und dem jeweiligen Klebstoff vorbei in die Nut eingeschoben wird. Die Aufweitung der Nut durch Auslenkung lediglich einer Flanke der Nut kommt insbesondere dann in Frage, wenn eine der beiden Flanken der Nut eine geringere Steifigkeit aufweist. Im in die Nut eingeschobenen Zustand der Feder rasten die beiden Rasthaken der beiden Flanken der Nut in die gegenüberliegend vorgesehenen Hinterschneidungen der Feder ein. Dadurch wird der Klebstoff beidseitig gegen den Randbereich der Feder gedrückt, und zwar durch jeweils eine der beiden Flanken der Nut. Auf diese Weise wird eine stoffschlüssige Verbindung zwischen der Feder und der Nut bzw. ein Verkleben des Randbereichs der Feder mit der angrenzenden Flanke der Nut erreicht. Auf die zuvor beschriebene Weise wird eine stabilere Nut/Feder-Verbindung erreicht, da sowohl beidseitig bezogen auf die Feder eine Rastverbindung als auch eine Verklebung bereitgestellt wird.

In diesem Zusammenhang ist es besonders bevorzugt, wenn die wenigstens zwei Rasthaken und die wenigstens zwei Hinterschneidungen jeweils einander gegenüberliegend vorgesehen sind. Die Rasthaken und die Hinterschneidungen können dabei jeweils vorzugsweise den gleichen Abstand zum Nutgrund bzw. zur Stirnfläche der Feder aufweisen. Zudem können die Rasthaken und die Hinterschneidungen alternativ oder zusätzlich so vorgesehen und/oder ausgebildet sein, dass diese beim Einschieben der Feder in die Nut im Wesentlichen gleichzeitig jeweils miteinander verrasten. Die Rastverbindung zwischen einem Rasthaken und einer Hinterschneidung kann dann die Rastverbindung des weiteren Rasthakens mit der weiteren Hinterschneidung nicht beeinträchtigen. Zudem muss die Feder, nachdem der Klebstoff einseitig von der entsprechenden Flanke der Nut gegen den angrenzenden Randbereich der Feder gedrückt worden ist, nicht weiter relativ zur Nut verschoben werden, um die weitere Rastverbindung zwischen dem weiteren Rasthaken und der weiteren Hinterschneidung zu schließen.

Bevorzugte Eigenschaften der Nut/Feder-Verbindung, insbesondere im Hinblick auf die Verbindungskräfte, können erreicht werden, wenn der Klebstoff von der wenigstens einen Flanke der Nut über im Wesentlichen die gesamte Breite des angrenzenden Randbereichs der Feder verteilt wird. Es wird also der gesamte Randbereich der Feder von der Stirnfläche bis zur Hinterschneidung für die Verklebung mit der Nut ausgenutzt. Auf diese Weise wird eine stabile und dauerhafte Nut/Feder-Verbindung erreicht.

Um eine zuverlässige und gleichmäßige Verteilung des Klebstoffs zwischen der mit dem Klebstoff versehenen Flanke der Nut und dem angrenzenden Randbereich der Feder zu erreichen, bietet es sich an, wenn die Aufweitung der Nut beim Einschieben der Feder in die Nut im Wege des Verrastens von Rasthaken und Hinterschneidung nicht vollständig aufgehoben wird. Es ist vielmehr bevorzugt, wenn nach dem Verrasten zwischen Nut und Feder im eingeschobenen Zustand der Feder in die Nut von wenigstens einer Flanke der Nut eine Rückstellkraft in Richtung der Feder ausgeübt wird. Die entsprechende Flanke der Nut drückt also noch im eingeschobenen Zustand der Feder in die Nut gegen den Randbereich der Feder bzw. gegen den zwischen dem entsprechenden Randbereich und der entsprechenden Flanke der Nut vorgesehenen Klebstoff. Auf diese Weise wird eine zuverlässige und reproduzierbare stoffschlüssige bzw. Klebeverbindung erhalten, die zudem aufgrund der Rückstellkraft in verbesserter Weise aushärtet.

Um die Federn in einfacher Weise mit einer Hinterschneidung zu versehen, die ausreichende mechanische Eigenschaften bereitstellt, bietet es sich an, wenn die wenigstens eine Hinterschneidung durch Prägen in der Feder vorgesehen wird, und zwar vorzugsweise vor dem Einschieben der Feder in die Nut.

Um die Zuverlässigkeit der Nut/Feder-Verbindung zu erhöhen, sowie eine stärkere Verbindung bereitzustellen, kann der wenigstens eine Rasthaken und die wenigstens eine Hinterschneidung im Wesentlichen durchgängig entlang der Feder miteinander verrastet werden. Somit kann letztlich die gesamte Länge der Feder und/oder der Nut zur Ausbildung der Nut/Feder-Verbindung ausgenutz werden.

Zusätzlich oder alternativ kann sich die Klebstoffschicht entlang des gesamten Randbereichs längs zur Nut erstrecken. Auf diese Weise wird die gesamte Länge des Randbereichs der Feder zur Verklebung mit der Nut genutzt, so dass die gebildete Nut/Feder-Verbindung zuverlässiger und langlebiger wird. Hinsichtlich des Aufbaus ist es besonders bevorzugt, wenn zwei Nut/Feder-Verbindungen vorgesehen sind, und dass die beiden Nuten der entsprechenden Nut/Feder-Verbindungen durch einen gemeinsamen Verbinder gebildet werden. Auf diese Weise müssen angrenzende Bauelemente des Aufbaus nicht dazu ausgebildet werden, selbst eine Nut/Feder-Verbindung bereitzustellen. Außerdem ist es nicht erforderlich, die miteinander zu verbindenden Bauelemente, die eine gewisse Größe aufweisen können und dementsprechend nur aufwendig zu handhaben sind, direkt miteinander zu verbinden. Die Fertigung des Aufbaus kann vielmehr dadurch erleichtert und beschleunigt werden, dass ein Verbinder bereitgestellt wird, der wenigstens eine, vorzugsweise wenigstens zwei, Nuten bildet. Im Fall von zwei Federn können in diese die Federn zweier angrenzender Bauelemente eingeschoben werden, und zwar bedarfsweise nacheinander.

Dabei kann der Verbinder derart ausgebildet sein, dass die beiden Nuten ein Verbinden der Federn mit dem Verbinder in einer parallelen Ebene oder über Eck ermöglichen. Im Falle einer parallelen Ebene bietet es sich insbesondere an, wenn diese Ebenen eine gemeinsame Ebene bilden. So können beispielsweise die Mittelebenen der beiden Nuten des Verbinders im Wesentlichen identisch sein. Im Falle einer Verbindung der beiden Federn mit den Verbindern über Eck bietet es sich an, wenn die Mittelebenen der Nuten zwischeneinander einen Winkel von etwa 90° einnehmen. Dies ermöglicht es beispielsweise, die Federn in einer Ausrichtung senkrecht zueinander miteinander zu verbinden. Dies ist insbesondere dann von Vorteil, wenn unterschiedliche Paneele eines Kofferaufbaus rechtwinklig zueinander über Eck miteinander verbunden werden müssen.

Grundsätzlich kann die Fertigung von Kofferaufbauten von Nutzfahrzeugen durch die Verwendung der beschriebenen Nut/Feder-Verbindungen vereinfacht und beschleunigt werden. Dies ist insbesondere dann der Fall, wenn die Feder durch ein Paneel oder den Boden eines Kofferaufbaus gebildet wird. Das Paneel des Kofferaufbaus kann ein Seitenwandpaneel, ein Dachpaneel oder ein Stirnwandpaneel sein. Mehrere dieser Paneele werden dabei vorzugsweise über einen Verbinder miteinander verbunden, der zwei Nuten zur Ausbildung von zwei Nut/FederVerbindungen aufweist. Die beiden Nuten sind dabei vorzugsweise derart ausgerichtet, dass die Verbindung der beiden Paneele über Eck erfolgen kann, um einen rechtwinkligen Kofferaufbau zu bilden. Es kann auch ein entsprechender Verbinder vorgesehen sein, um beispielsweise eine Seitenwand, insbesondere ein Seitenwandpaneel, oder eine Stirnwand, insbesondere ein Stirnwandpaneel, mit dem Boden jeweils des Kofferaufbaus vorzugsweise über Eck miteinander zu verbinden. Zudem kann ein Verbinder vorgesehen sein, der gegebenenfalls nur eine Nut aufweist. Beispielsweise ist der Verbinder ein Teil des Rückwandrahmens der Rückwand. Der Rückwandrahmen oder Teile davon können dann mit wenigstens einer Seitenwand und/oder einem Dach, vorzugsweise mit wenigstens einem Seitenwandpaneel und/oder Dachpaneel, verbunden werden, indem die wenigstens eine Seitenwand und/oder das Dach in die wenigstens eine Nut des Rückwandrahmens oder Rückwandrahmenteils eingeschoben wird.

Alternativ oder zusätzlich kann aber auch vorgesehen sein, dass die Feder durch ein Paneelelement eines Paneels eines Kofferaufbaus gebildet wird. Unter einem Paneelelement wird dabei eines von mehreren Elementen eines Paneels eines Kofferaufbaus verstanden. Auch diese Paneele können ein Seitenwandpaneel, ein Dachpaneel oder ein Stirnwandpaneel sein. Über einen Verbinder mit zwei Nuten zur Bereitstellung von zwei Nut/Feder-Verbindungen können zwei Paneelelemente vorzugsweise in einer gemeinsamen Ebene miteinander verbunden werden. Somit kann durch eine Mehrzahl von Paneelelementen und bedarfsweise einer Mehrzahl von Verbindern ein Seitenwandpaneel, ein Dachpaneel oder ein Stirnwandpaneel gebildet werden. Die einzelnen Paneelelemente sind dann vorzugsweise jeweils über eine Nut/Feder-Verbindungen mit dem Verbinder und somit untereinander verbunden. Der Verbinder kann in diesem Zusammenhang vorzugsweise einen H-förmigen Querschnitt aufweisen. Dabei sind die Schenkel des Verbinders, welche die Flanken der Nuten bilden, vorzugsweise in der Art vorgesehen, dass aus mehreren Paneelelementen ein im Wesentlichen ebenes Paneel gebildet werden kann.

Hinsichtlich des Paneels und/oder des Paneelelements, welche die wenigstens eine Feder der Nut/Feder-Verbindung bereitstellen, ist es hinsichtlich der mechanischen sowie thermischen Eigenschaften des Aufbaus bevorzugt, wenn diese eine formstabile äußere Decklage und eine dazwischen vorgesehene Kernlage aus einem geschäumten Kunststoff aufweisen. Besonders hohe thermische Isolationswerte werden dabei erreicht, wenn der geschäumte Kunststoff ein geschäumtes Polyurethan (PU) ist.

Des Weiteren ist es grundsätzlich bevorzugt, wenn die wenigstens eine Flanke der Nut, vorzugsweise die Nut selbst oder weiter vorzugsweise der die wenigstens eine Nut aufweisende Verbinder aus einem Kunststoff und/oder Metall gebildet ist. Dieses ist kostengünstig und ermöglicht zudem eine stabile Verbindung. Des Weiteren bieten entsprechende Werkstoffe eine hinreichende Elastizität, um die Nut beim Einschieben der Feder aufzuweiten und beim Einrasten des wenigstens einen Rasthakens in die wenigstens eine Hinterschneidung den Klebstoff gegen den Randbereich der Feder zu drücken. Aufgrund der mechanischen und physikalischen Eigenschaften bieten sich Polyethylen (PE), Polypropylen (PP), Polyvinylchlorid (PVC), Polyurethan (PU), Polyethylenterephthalat (PET), Polyamid (PA) und/oder Acrylnitril-Butadien-Styrol (ABS) als Kunststoffe an. Aus Gewichtsgründen bietet es sich weiter an, wenn als Metall Aluminium verwendet wird. Zur besseren thermischen Isolation kann es bevorzugt sein, wenn die Flanken der Nut, sofern diese aus einem Metall gebildet werden, über einen Kunststoff miteinander voneinander getrennt sind. Der Kunststoff kann dabei vorzugsweise den Nutgrund der Nut bilden. Eine entsprechende thermische Trennung ist insbesondere dann zweckmäßig, wenn die Feder durch ein Paneel und/oder ein Paneelelement eines Paneels eines Kofferaufbaus gebildet wird. Dann kann die innere Flanke einer Nut nämlich dem Laderaum und die äußere Flanke der Umgebung des Kofferaufbaus zugeordnet sein.

Unter mechanischen Gesichtspunkten hat es sich als besonders bevorzugt herausgestellt, wenn die Hinterschneidung zwischen 1 mm bis 5 mm, vorzugsweise zwischen 2 mm und 4 mm, tief ausgeprägt ist. Auf diese Weise können ausreichende Auszugskräfte durch die Rastverbindung zwischen Rasthaken und Hinterschneidung aufgenommen werden. Alternativ oder zusätzlich hat es sich als zweckmäßig erwiesen, wenn die Hinterschneidung zwischen 20 mm bis 80 mm, vorzugsweise zwischen 30 mm und 50 mm, vom Rand der Feder beabstandet ist. Auf diese Weise wird ein Randbereich der Feder mit einer ausreichenden Breite bereitgestellt, um eine zuverlässige Verklebung zwischen dem Randbereich und der angrenzenden Flanke der Nut zu erreichen.

Die Erfindung wird nachfolgend anhand einer lediglich Ausführungsbeispiele darstellenden Zeichnung näher erläutert. In der Zeichnung zeigt
- Fig. 1: ein Nutzfahrzeug mit einem wenigstens eine erfindungsgemäße Nut/Feder-Verbindung aufweisenden Kofferaufbau,
- Fig. 2: einen ersten Verbinder zur Bildung zweier erfindungsgemäßer Nut/Feder-Verbindungen,
- Fig. 3: den Verbinder aus Fig. 2 während des Einschiebens einer Feder in eine Nut,
- Fig. 4: den Verbinder aus Fig. 2 mit einer ersten erfindungsgemäßen Nut/Feder-Verbindung,
- Fig. 5: den Verbinder aus Fig. 2 mit zwei ersten erfindungsgemäßen Nut/Feder-Verbindungen über Eck,
- Fig. 6: einen zweiten Verbinder zur Bildung zweier erfindungsgemäßer Nut/Feder-Verbindungen,
- Fig. 7: den Verbinder aus Fig. 6 mit zwei zweiten erfindungsgemäßen Nut/Feder-Verbindungen in einer gemeinsamen Ebene,
- Fig. 8: einen dritten Verbinder zur Bildung zweier erfindungsgemäßer Nut/Feder-Verbindungen,
- Fig. 9: den Verbinder aus Fig. 8 während des Einschiebens einer Feder in eine Nut und
- Fig. 10: den Verbinder aus Fig. 8 mit einer dritten erfindungsgemäßen Nut/Feder-Verbindung.

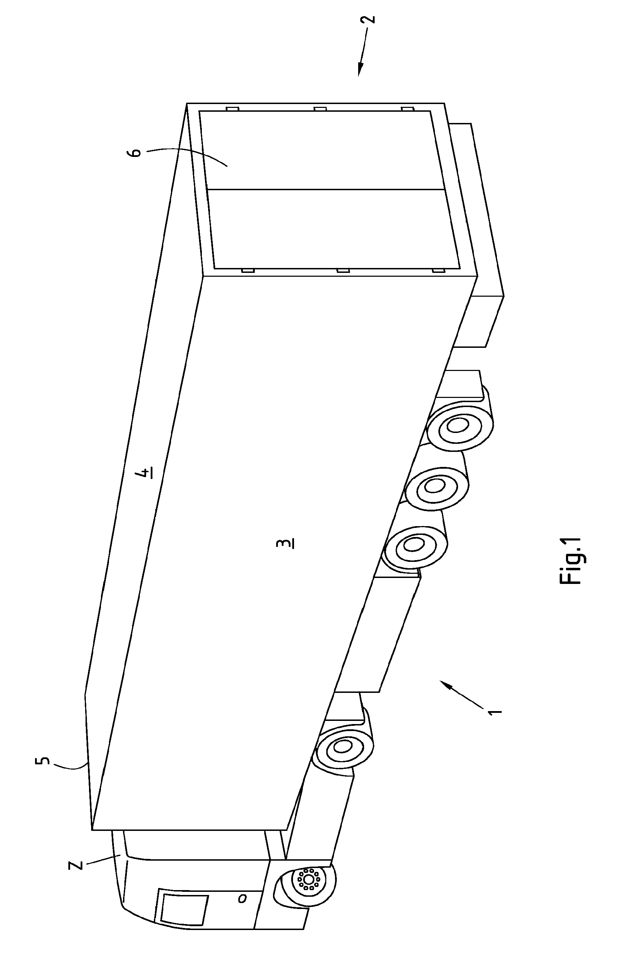

In der Fig. 1 ist ein Nutzfahrzeug 1 in Form eines Sattelaufliegers mit einem Aufbau in Form eines Kofferaufbaus 2 dargestellt. Das Nutzfahrzeug 1 wird von einer Zugmaschine Z gezogen. Der Kofferaufbau 2, in dem sich ein Laderaum befindet, umfasst einen Boden, zwei Seitenwandpaneele 3, ein Dachpaneel 4, ein Stirnwandpaneel 5 und eine Rückwand 6 mit zwei Türen, welche den Zugang zum Laderaum ermöglichen.

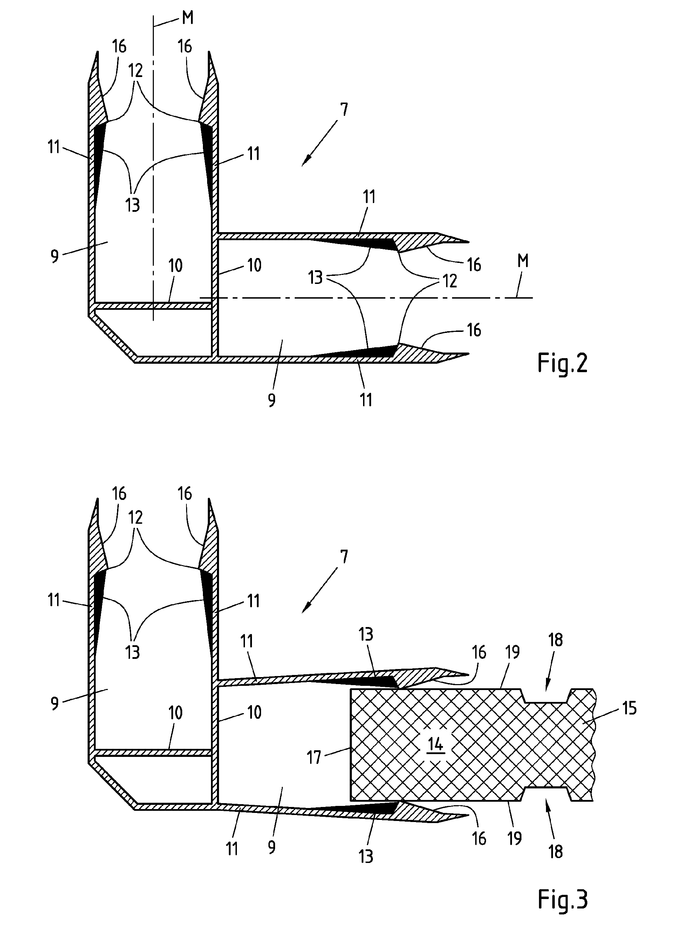

In der Fig. 2 ist ein Verbinder 7 zur Bildung zweier Nut/Feder-Verbindungen 8 dargestellt. Zu diesem Zweck weist der Verbinder 7 zwei Nuten 9 auf, die im Wesentlichen senkrecht zueinander ausgerichtet sind. Die Nuten 9 umfassen jeweils einen Nutgrund 10 und zwei Flanken 11. Jede Flanke 11 trägt einen Rasthaken 12, der jeweils in Richtung der gegenüberliegenden Flanke 11 derselben Nut 9 weist. Zudem liegen die Rasthaken 12 einander jeweils gegenüber und sind in etwa gleichweit vom Nutgrund 10 beabstandet. Zwischen den Rasthaken 12 ist die Öffnungsweite der Nut 9 beim dargestellten und insoweit bevorzugten Verbinder 7 am geringsten. Die Rasthaken 12 sind beim dargestellten und insoweit bevorzugten Verbinder 7 durchgängig über die gesamte Länge der Nut 9 vorgesehen.

An jeder Flanke 11 der Nuten 9 ist zwischen dem Rasthaken 12 und dem Nutgrund 10 ein Klebstoff 13 aufgebracht, der dem Verkleben des Verbinders 7 mit einer in die jeweilige Nut 9 eingeschobenen Feder 14 dient. Beim dargestellten und insoweit bevorzugten Verbinder 7 ist der Klebstoff 13 im Bereich der Rasthaken 12 dicker vorgesehen als näher am Nutgrund 10. Beim dargestellten uns insoweit bevorzugten Verbinder 7 nimmt die Schichtdicke des Klebstoffs 13 zudem vom Rasthaken 12 in Richtung des Nutgrunds 10 im Wesentlichen stetig ab, wobei der Klebstoff 13 beim dargestellten und insoweit bevorzugten Verbinder 7 nicht bis an den Nutgrund 10 heranreicht. Der Klebstoff 13 könnte aber auch in anderer Art und Weise, etwa in Form von wenigstens einer Klebstoffraupe, vorzugsweise mit einem etwa kreisförmigen oder ovalen Querschnitt, insbesondere längs der Nut 9, auf die Flanken 11 aufgebracht sein.

Bei dem dargestellten Verbinder 7 öffnen sich die Nuten 9 in zwei Richtungen, die zwischeneinander einen Winkel von im Wesentlichen 90° einschließen. Mit anderen Worten schneiden sich die Mittelebenen M der beiden Nuten 9 des Verbinders 7 im Wesentlichen senkrecht. Die Nuten 9 sind also über Eck zueinander ausgerichtet, um beispielsweise Paneele 15 über Eck miteinander zu verbinden.

In der Fig. 3 ist der Verbinder 7 aus der Fig. 2 während des Einschiebens einer Feder 14 in eine der Nuten 9 des Verbinders 7 dargestellt. Die Flanken 11 bzw. die Rasthaken 12 laufen zur Öffnung der Nut 9 leicht schräg auseinander. An diesen Schrägen 16 kann die in die Nut 9 einzuschiebende Feder 14 abgleiten und wenigstens eine der beiden Flanken 11 nach außen drücken. Beim dargestellten und insoweit bevorzugten Verbinder 7 werden beide Flanken 11 der entsprechenden Nut 9 nach außen gedrückt und dementsprechend leicht nach außen umgebogen. Somit ergibt sich eine Aufweitung der Nut 9, und zwar dergestalt, dass sich die Öffnungsweite der Nut 9 zwischen den Rasthaken 12 vergrößert.

Anschließend gelangt die Feder 14 zwischen die Rasthaken 14 und gleitet sodann weiter in Richtung des Nutgrunds 10. Dabei bleiben die Flanken 11 leicht nach außen umgebogen. Der Klebstoff 13 ist im leicht umgebogenen Zustand der Flanken 11 in Einschubrichtung gesehen im Wesentlichen vollständig hinter den Rasthaken 12 vorgesehen. Gleiches wäre vorzugsweise der Fall, wenn der Klebstoff 13 in Form einer Raupe aufgebracht wäre. Ein Teil des Klebstoffs 13 könnte auch senkrecht zur Einschubrichtung gegenüber dem zugehörigen Rasthaken 12 vorstehen. Dann würde dieser Teil jedoch von der Stirnfläche 17 der Feder 14 abgeschert. Für den Fall, dass die Nut 9 weit genug in die Nut 9 eingeschoben wird, könnte dieser Teil dazu dienen, die Stirnfläche 17 der Feder 14 mit dem Nutgrund 10 zu verkleben.

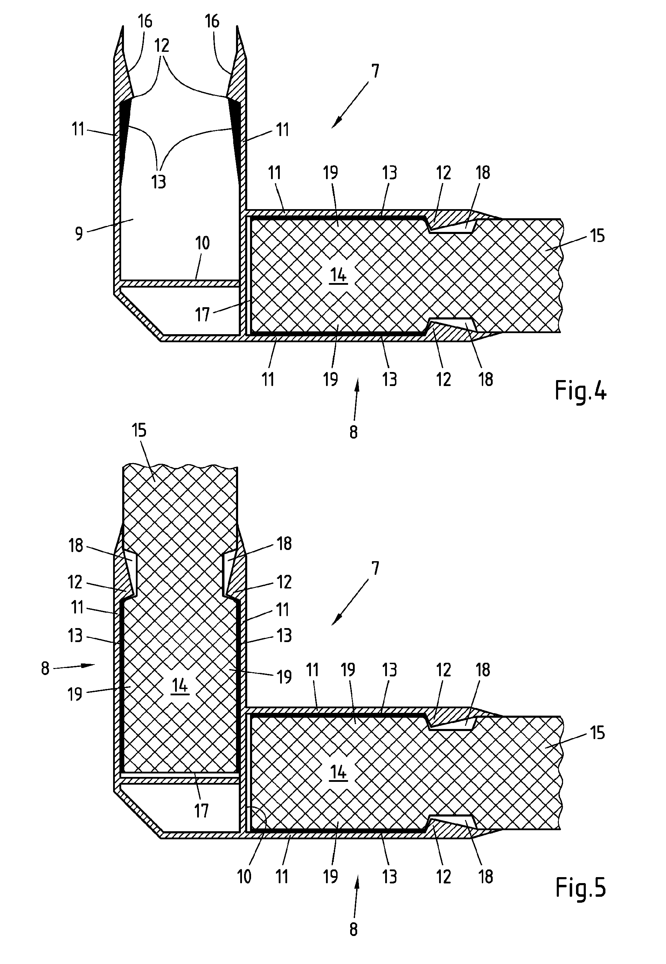

In der Fig. 4 ist die Feder 14 im in die Nut 9 eingeschobenen Zustand dargestellt, in dem die Rasthaken 12 jeweils in korrespondierende Hinterschneidungen 18 der Feder 14 eingerastet sind. Die Hinterschneidungen 18 erstrecken sich bei der dargestellten und insoweit bevorzugten Feder 14 über die gesamte Länge der Nut 9. Zudem definieren die Hinterschneidungen 18 einen zur Stirnseite der Feder 14 weisenden Randbereich 19 der Feder 14, gegen den der auf der Innenseite der Flanken 11 aufgebrachte Klebstoff 13 gedrückt wird, sobald die Rasthaken 12 in die entsprechenden Hinterschneidungen 18 der Feder 14 einrasten. Bei der dargestellten und insoweit bevorzugten Nut/Feder-Verbindung 8 erstreckt sich die Klebstoffschicht über die gesamte Breite des Randbereichs 19 der Feder 14. Dies ist nicht zwingend erforderlich, kann aber beispielsweise dadurch realisiert werden, dass der Klebstoff 13 in entsprechender Breite auf die Innenseite der zugehörigen Flanke 11 der Nut 9 aufgebracht wird oder dass der Klebstoff 13 durch die Rückstellkraft beim Verrasten des Rasthakens 12 mit der Hinterschneidung 18 auf dem Randbereich 19 der Feder 14 verteilt wird. Letzteres ist insbesondere dann der Fall, wenn der Klebstoff 13 in Form einer Raupe 20 auf die Flanken 11 der Nut 9 aufgebracht wird.

Bei der dargestellten und insoweit bevorzugten Nut/Feder-Verbindung 8 gelangen die Flanken 11 der entsprechenden Nut 9 beim Verrasten mit den korrespondierenden Hinterschneidungen 18 nicht wieder in die Ausgangslage vor dem Einschieben der Feder 14 in die Nut 9 zurück. Vielmehr verbleibt eine geringfügige Aufweitung der Nut 9 und damit eine Rückstellkraft der noch leicht nach außen umgebogenen Flanken 11. Es wird also bei der dargestellten uns insoweit bevorzugten Nut/Feder-Verbindung 8 von den Flanken 11 ein entsprechender Druck auf den Klebstoff 13 und/oder die Feder 14 ausgeübt.

In der Fig. 5 ist der Verbinder 7 mit zwei in die Nuten 9 eingeschobenen Federn 14 dargestellt. Bei den dargestellten und insoweit bevorzugten Nut/Feder-Verbindungen 8 werden die Federn 14 von Paneelen 15 eines Kofferaufbaus 2 gebildet, die über die Verbinder 7 über Eck miteinander verbunden sind. Es kann sich dabei um ein Seitenwandpaneel 3 handeln, das mit einem Dachpaneel 4 oder mit einem Stirnwandpaneel 5 verbunden ist. Es kann sich aber auch um ein Dachpaneel 4 handeln, das mit einem Stirnwandpaneel 5 verbunden ist. Alternativ könnte es sich dabei aber prinzipiell auch um ein Seitenwandpaneel, ein Stirnwandpaneel oder eine Rückwand handeln, die mit dem Boden verbunden ist. Die Paneele 3,4,5 sind über Eck, und zwar im Wesentlichen senkrecht zueinander ausgerichtet, um einen im Wesentlichen quaderförmigen Kofferaufbau 2 zu bilden. Die dargestellten und insoweit bevorzugten Paneele 3,4,5 weisen formstabile äußere Strukturlagen aus einem Metall, einem Kunststoff oder einem Metall/Kunststoff-Verbund auf. Dazwischen ist eine Kernlage aus einem geschäumten Kunststoff, etwa in Form eines Polyurethans, vorgesehen.

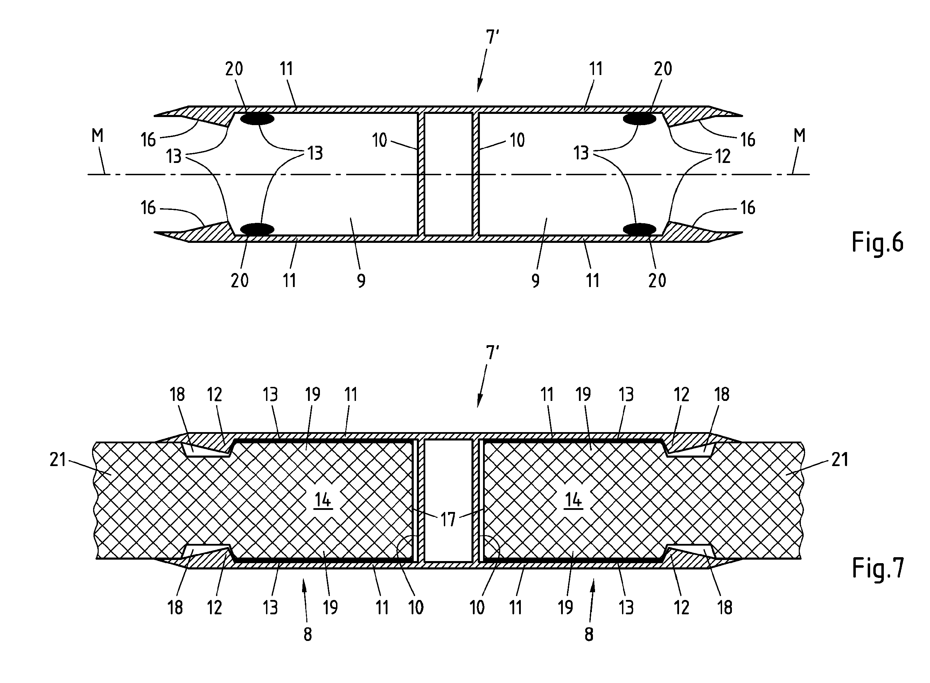

In der Fig. 6 ist ein weiterer Verbinder 7' zur Bildung zweier Nut/Feder-Verbindungen 8 dargestellt. Die Nuten 9 dieses Verbinders 7' entsprechen im Wesentlichen den Nuten 9 des Verbinders 7 gemäß Fig. 2. Jedoch sind die Nuten 9 des Verbinders 7' gemäß Fig. 6 in der gleichen Ebene ausgerichtet, wobei die Öffnungen der Nuten 9 in entgegengesetzte Richtungen weisen. Die Mittelebenen M der beiden Nuten 9 überlagern einander. Zudem ist der Klebstoff 13 in Form von Raupen 20 an den Flanken 11 der Nuten 9 vorgesehen.

In der Fig. 7 ist der Verbinder 7' aus Fig. 6 mit zwei eingeschobenen Federn 14 dargestellt. Es werden somit zwei Nut/Feder-Verbindungen 8 bereitgestellt. Die beiden Federn 14 werden vorzugsweise durch Paneelelemente 21 eines gemeinsamen Paneels 3,4,5, wie beispielsweise eines Stirnwandpaneels 5, eines Seitenwandpaneels 3 oder eines Dachpaneels 4 eines Kofferaufbaus 2 gebildet. Verbinder 7' gemäß Fig. 6 ermöglichen es, ein ebenes Paneel 3,4,5 aus einer Reihe von separaten Paneelelementen 21 zusammenzusetzen, wobei jeweils zwei angrenzende Paneelelemente 21 über einen Verbinder 7' der in der Fig. 6 dargestellten Art verbunden sind. Es binden sich dabei jeweils zwei Nut/Feder-Verbindungen 8 aus, die jeweils für sich genommen prinzipiell den Nut/Feder-Verbindungen 8 gemäß Fig. 5 entsprechen. Daher wird diesbezüglich auf die vorstehende Beschreibung verwiesen. Die dargestellten und insoweit bevorzugten Paneelelemente 21 weisen formstabile äußere Strukturlagen aus einem Metall, einem Kunststoff oder einem Metall/Kunststoff-Verbund auf. Dazwischen ist eine Kernlage aus einem geschäumten Kunststoff, etwa in Form eines Polyurethans, vorgesehen.

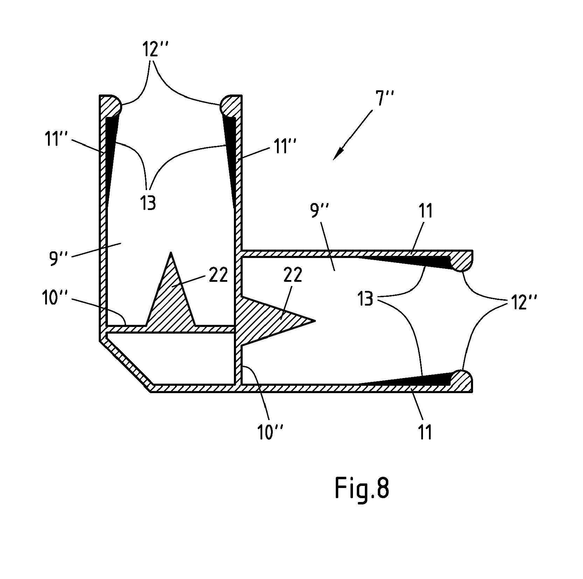

In der Fig. 8 ist eine weitere Art eines Verbinders 7" dargestellt, bei dem die Nuten 9" rechtwinklig zueinander ausgerichtet sind. Die Nuten 9" könnten alternativ aber auch in einer gemeinsamen Ebene angeordnet sein, wie dies in der Fig. 6 dargestellt ist. Bei dem Verbinder 7" der Fig. 8 sind die Rastnasen 12" etwas abgerundet ausgebildet. Zudem ist jeweils am Nutgrund 10" eine sich in Längsrichtung erstreckende und in die Nut 9" ragende Rippe 22 vorgesehen, die sich zu ihrem freien Ende hin verjüngt. Der Verbinder 7" ist daher zum Einschieben von Federn 14" mit einer Aussparung 23 vorgesehen. Beim dargestellten und insoweit bevorzugten Verbinder 7" ist die Rippe 22 etwa mittig quer zum Nutgrund 10" angeordnet.

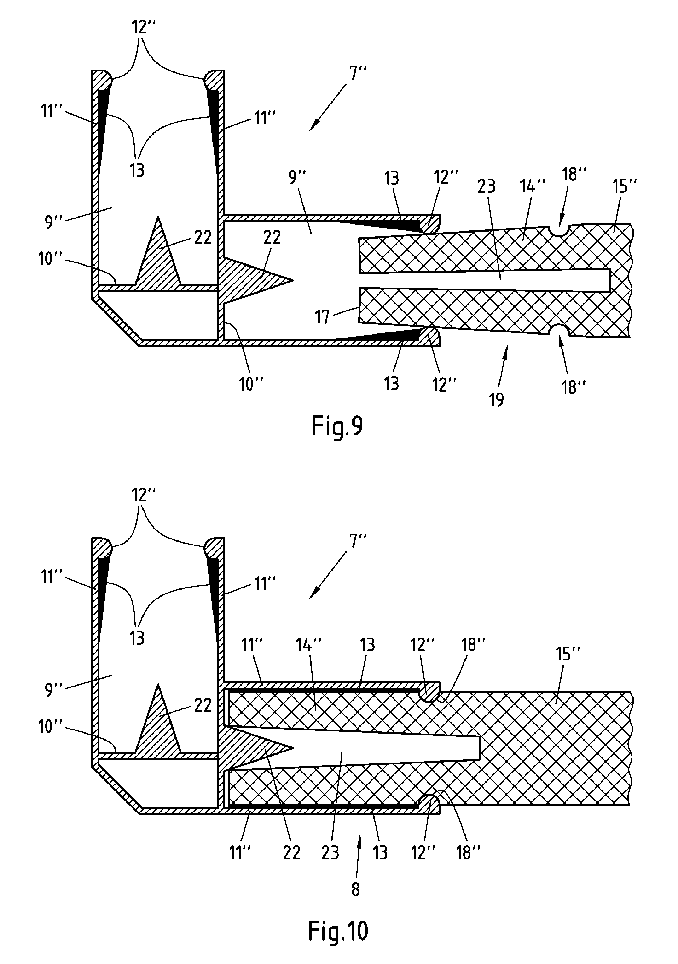

Eine entsprechende Feder 14" ist in der Fig. 9 in einem teilweise in die Nut 9 eingeschobenen Zustand dargestellt. Die Feder 14" verjüngt sich im Randbereich 19" hin zur Stirnfläche 17" der Feder 14". Daher kann die Feder 14" ein Stück weit in die Nut 9" eingeschoben werden, ohne die Feder 14" aufzuweiten. Dies erfolgt erst, wenn die Feder 14" weiter in die Nut 9" eingeschoben wird. Zudem gelangt dabei die Rippe 22 der Nut in Eingriff mit der Aussparung 23 der Feder 14". Die beiden an die Aussparung 23 grenzenden Abschnitte des Randbereichs 19" der Feder 14" werden in dem Maße nach außen gedrückt, wie die Rippe 22 in die Aussparung 23 gelangt. Die Feder 14" wird also durch den Eingriff der Rippe 22 in die Aussparung 23 der Feder 14" aufgeweitet, so dass die Rasthaken 12" der Nut 9" in die Hinterschneidungen 18" der Feder 14" einhaken und einen Formschluss bilden.

In diesem Zusammenhang wird darauf hingewiesen, dass die Feder so an die Nut angepasst sein kann, dass die Feder beim Einschieben die Nut nicht aufweitet. Die Feder ist dann im Randbereich nicht dicker als die Öffnungsweite der Nut. Das Verrasten des wenigstens einen Rasthakens mit der wenigstens einen Hinterschneidung erfolgt dann lediglich durch das Aufweiten der Feder infolge des Eingriffs der Rippe der Nut in die Aussparung der Feder beim Einschieben der Feder in die Nut. Praktisch wird dies jedoch bevorzugt dennoch mit einer, wenn auch sehr geringen, Aufweitung der Nut einhergehen. Zwingend erforderlich ist die Aufweitung der Nut jedoch nicht.

Durch das Aufweiten der Feder 14" wird diese zudem gegen die Flanken 11" der Nut 9" gedrückt. Mithin drückt der Randbereich 19" der Feder 14" gegen den dort vorgesehenen Klebstoff 13, der infolgedessen beim dargestellten und insoweit bevorzugten Verbinder 7" im Wesentlichen über den gesamten Randbereich 19" der Feder 14" verteilt wird, wie dies in der Fig. 10 dargestellt ist. Sodann kann der Klebstoff 13 zur Bildung einer stoffschlüssigen Verbindung zwischen der Feder 14" und der Nut 9" aushärten.

Die in den Fig. 2 bis 10 dargestellten Verbinder 7,7',7" können aus einem Kunststoff, einem Metall oder einem Kunststoff/Metall-Verbund gebildet sein. Insbesondere bietet es sich an, wenn die Bereiche bzw. Verbindungen zwischen den Flanken 11,11" der Nut 9,9", welche den Nutgrund 10,10" bilden können, aus einem Kunststoff gebildet sind. Auf diese Weise können Kältebrücken vermieden und die thermische Isolation, insbesondere von Kofferaufbauten 2 für Kühltransporte, verbessert werden.

## Patentansprüche

1. Verfahren zur Bildung wenigstens einer Nut/Feder-Verbindung (8,8") eines Aufbaus eines Nutzfahrzeugs, vorzugsweise Lastkraftwagens, Anhängers oder Sattelaufliegers, wobei an wenigstens einer Flanke (11,11") der Nut (9,9") ein vom Nutgrund (10,10") beabstandeter und in die Nut (9,9") ragender Rasthaken (12,12") vorgesehen ist, wobei die Feder (14,14") einen Randbereich (19,19") und wenigstens eine an den Randbereich (19,19") angrenzende Hinterschneidung (18,18") aufweist und wobei der Randbereich (19,19") der Feder (14,14") dicker als die Öffnungsweite der Nut (9,9") im Bereich des Rasthakens (12,12") ist,
bei dem auf wenigstens eine Flanke (11,11") der Nut (9,9") zwischen dem wenigstens einen Rasthaken (12,12") und dem Nutgrund (10,10") ein Klebstoff (13) aufgebracht wird,
bei dem der Randbereich (19,19") der Feder (14,14") unter Aufweitung der Nut (9,9") im Bereich der wenigstens einen mit Klebstoff (13) versehenen Flanke (11,11") an dem wenigstens einen Rasthaken (12,12") vorbei in die Nut (9,9") eingeschoben wird,
bei dem der Randbereich (19,19") der Feder (14,14") an dem im aufgeweiteten Bereich der Nut (9,9") zwischen dem Nutgrund (10,10") und dem wenigstens einen Rasthaken (12,12") der entsprechenden Flanke (11,11") der Nut (9,9") vorgesehenen Klebstoff (13) vorbei in die Nut (9,9") eingeschoben wird,
bei dem der wenigstens eine Rasthaken (12,12") im in die Nut (9,9") eingeschobenen Zustand der Feder (14,14") mit der wenigstens einen Hinterschneidung (18,18") formschlüssig verrastet und
bei dem die mit dem Klebstoff (13) versehene Flanke (11,11") der Nut (9,9") beim Verrasten des wenigstens einen Rasthakens (12,12") mit der wenigstens einen Hinterschneidung (18,18") gegen den Randbereich (19,19") der Feder (14,14") gedrückt und mit dem Randbereich (19,19") der Feder (14,14") verklebt wird.

2. Verfahren nach Anspruch 1,
wobei jede Flanke (11,11") der Nut (9,9") wenigstens einen Rasthaken (12,12") und der Randbereich (19,19") der Feder (14,14") auf gegenüberliegenden Seiten wenigstens jeweils eine Hinterschneidung (18,18") aufweist,
bei dem auf beide Flanken (11,11") der Nut (9,9") zwischen dem jeweils wenigstens einen Rasthaken (12,12") und dem Nutgrund (10,10") ein Klebstoff (13) aufgebracht wird,
bei dem der Randbereich (19,19") der Feder (14,14") unter Aufweitung der Nut (9,9") im Bereich wenigstens einer Flanke (11,11") an den wenigstens zwei Rasthaken (12,12") und jeweils dem Klebstoff (13) vorbei in die Nut (9,9") eingeschoben wird,
bei dem die wenigstens zwei Rasthaken (12,12") im in die Nut (9,9") eingeschobenen Zustand der Feder (14,14") mit den wenigstens zwei Hinterschneidungen (18,18") formschlüssig verrasten und
bei dem der Klebstoff (13) von den Flanken (11,11") der Nut (9,9") beim Verrasten der Rasthaken (12,12") mit den Hinterschneidungen (18,18") beidseitig gegen den Randbereich (19,19") der Feder (14,14") gedrückt und beidseitig mit dem Randbereich (19,19") der Feder (14,14") verklebt wird.

3. Verfahren nach Anspruch 2,
wobei die wenigstens zwei Rasthaken (12,12") und die wenigstens zwei Hinterschneidungen (18,18") einander gegenüberliegend vorgesehen sind und bei dem die wenigstens zwei Rasthaken (12,12") und die wenigstens zwei Hinterschneidungen (18,18") beim Einschieben der Feder (14,14") in die Nut (9,9") im Wesentlichen gleichzeitig jeweils miteinander verrasten.

4. Verfahren nach einem der Ansprüche 1 bis 3,
bei dem der Klebstoff (13) von der wenigstens einen Flanke (11,11") der Nut (9,9") über im Wesentlichen die gesamten Breite des angrenzenden Randbereichs (19,19") der Feder (14,14") verteilt wird.

5. Verfahren nach einem der Ansprüche 1 bis 4,
bei dem die wenigstens eine einen Klebstoff (13) aufweisende Flanke (11,11") im in die Nut (9,9") eingeschobenen Zustand der Feder (14,14") eine Rückstellkraft in Richtung der Feder (14,14") ausübt.

6. Verfahren nach einem der Ansprüche 1 bis 5,
bei dem die wenigstens eine Hinterschneidung (18,18") in die Feder (9,9") hinein geprägt wird.

7. Verfahren nach einem der Ansprüche 1 bis 6,
bei dem der wenigstens eine Rasthaken (12,12") und die wenigstens eine Hinterschneidung (18,18") im Wesentlich durchgängig entlang der Feder (9,9") miteinander verrasten.

8. Aufbau eines Nutzfahrzeugs (1), vorzugsweise Lastkraftwagens, Anhängers oder Sattelaufliegers, mit wenigstens einer Nut/Feder-Verbindung (8,8"), vorzugsweise hergestellt nach einem der Ansprüche 1 bis 7, wobei an wenigstens einer Flanke (11,11") der Nut (9,9") ein in die Nut (9,9") ragender und vom Nutgrund (10,10") beabstandeter Rasthaken (12,12") vorgesehen ist, wobei die Feder (14,14") einen Randbereich (19,19") und wenigstens eine an den Randbereich (19,19") angrenzende Hinterschneidung (18,18") aufweist und wobei der wenigstens eine Rasthaken (12,12") und die wenigstens eine Hinterschneidung (18,18") formschlüssig verrastet sind,
**dadurch gekennzeichnet, dass** zwischen dem wenigstens einen Rasthaken (12,12") und dem Nutgrund (10,10") eine mit dem Randbereich (19,19") der Feder (9,9") verbundene Klebstoffschicht vorgesehen ist und wobei die Klebstoffschicht durch das Verrasten von Nut (9,9") und Feder (14,14") zwischen der Flanke (11,11") der Nut (9,9") und dem Randbereich der Feder (9,9") verteilt worden ist.

9. Aufbau nach Anspruch 8,
**dadurch gekennzeichnet, das**s sich die Klebstoffschicht entlang des gesamten Randbereichs (19,19") längs zur Nut (9,9") erstreckt.

10. Aufbau nach Anspruch 8 oder 9,
**dadurch gekennzeichnet, das**s zwei Nut/Feder-Verbindungen (8,8") vorgesehen sind, dass die beiden Nuten (9,9") der Nut/Feder-Verbindungen (8,8") durch einen gemeinsamen Verbinder (7,7',7") gebildet werden.

11. Aufbau nach Anspruch 10,
**dadurch gekennzeichnet, das**s die beiden Federn (9,9") in einer parallelen, vorzugsweise gemeinsamen, Ebene oder über Eck miteinander verbunden sind.

12. Aufbau nach Anspruch 10 oder 11,
**dadurch gekennzeichnet, dass** die Feder (14,14") durch ein Paneel (15,15") eines Kofferaufbaus (2) und/oder durch ein Paneelelement (21) eines Paneels (15,15") eines Kofferaufbaus (2) gebildet wird.

13. Aufbau nach einem der Ansprüche 10 bis 12,
**dadurch gekennzeichnet, das**s das Paneel (15,15") und/oder das Paneelelement (21) zwei formstabile äußere Decklagen und eine dazwischen vorgesehene Kernlage aus einem geschäumten Kunststoff, insbesondere Polyurethan, aufweist.

14. Aufbau nach einem der Ansprüche 8 bis 13,
**dadurch gekennzeichnet, das**s die wenigstens eine Flanke (11,11") der Nut (9,9"), vorzugsweise die Nut (9,9"), weiter vorzugsweise der die wenigstens eine Nut (9,9") aufweisende Verbinder (7,7',7"), aus einem Kunststoff und/oder aus Metall, vorzugsweise Aluminium, gebildet ist.

15. Aufbau nach einem der Ansprüche 8 bis 14,
**dadurch gekennzeichnet, das**s die Hinterschneidung (18,18") zwischen 1 mm bis 5 mm, vorzugsweise zwischen 2 mm und 4 mm tief und/oder zwischen 20 mm bis 80 mm, vorzugsweise zwischen 30 mm und 50 mm, vom Rand der Feder (14,14") beanstandet ist.
